# EUROPEAN PATENT APPLICATION

(11) **EP 0 782 140 A2**
(43) Date of publication of application: **02.07.1997**
(21) Application number: 96308976.8
(22) Date of filing: 11.12.1996
(51) Int. Cl.: G11B 27/11

(54) **High speed search device for standard definition video cassette recorder**

(30) Priority: 27.12.1995 KR 9559417
(71) Applicant: Samsung Electronics Co., Ltd., Suwon City, Kyungki-do (KR)
(72) Inventor: Park, Se-Kap, Jangahn-Gu, Suwon-City, Kyungki-Do (KR); Kim, Byeong-Soo, Kwacheon-City, Kyungki-Do (KR)
(74) Representative: Neill, Alastair William

(57) **Abstract**

A high speed search device of a video cassette recorder includes a first data compressing unit (10) for receiving data in units of predetermined bits and compressing the data so as to reduce it into a predetermined amount, an error correcting code inserting unit (20) for inserting an error correcting code between the data, a modulator (30) for modulating the data coded in accordance with a recording type, a record signal amplifier (40) for amplifying the modulated data, a recording medium (130) for recording the amplified data, a reproduction signal amplifier (70) for amplifying the recorded data for its reproduction, a demodulator (80) for changing the modulated data into its original form, an error correcting/ decoding unit (90) for correcting and decoding the output of the demodulator (80) with the inserted error correcting code, a first data decompressing unit (106) for decompressing the compressed data into its original data, a second compressing unit (56) for compressing the input data into a predetermined amount of data, a first cassette memory unit (60) for storing the compressed data in a memory of a cassette, a second cassette memory unit (110) for storing previous data, a second data decompressing unit (120) for decompressing the data stored in the memory, and a micro-computer (140) for controlling a storage and a decompression of data.

## Description

This invention relates to a video cassette recorder, specifically, though not exclusively, to a high speed search device of a standard definition video cassette recorder.

In relation to the digital processing of a video signal, since a digital process, digital reproduction, and full digital process could be performed in a video cassette recorder (VCR), a standard digital VCR (Standard Definition VCR: SD-VCR) arose through an international conference of manufacturers of various countries. The reproduction tape for the SD-VCR is interchangeable only in the case in which that the reproduction tape is recorded and reproduced according to a definition of the form of the SD-VCR reproduction tape. The following description is based on the SD-VCR.

The SD-VCR is a complex product which can be used for various purposes. It is used as a general camcorder, and has a high density, high bandwidth forms and an option for using a secondary memory of a computer in the future. A still video camera had ever been produced before. Although the market for the product was not existing, the still video camera had various usages. The digital camcorder is also made to have such a function, in other words, it is a complex product having the several functions including the still video camera function (the product can be used for various usages because it performs the full digital process).

According to the prior art, when there are many scenes, it is difficult to find a specific scene, and even when the scene is found, it takes some time to move to the scene because the data recorded on a memory in a cassette contains only the date and time of the scene photographed in a photo mode, and the photographed position of the scene on the tape.

Accordingly, an aim of preferred embodiments of the invention is to provide a high speed search device of a video cassette recorder for reducing an amount of data by compressing a scene photographed in the photo mode into a memory of tape and for recording an image in a cassette memory unit in the case of recording.

Another aim of preferred embodiments of the invention is to provide a high speed search device of a video cassette recorder for finding a specific scene, watching the photographed scenes themselves as well as an index by restoring scenes recorded in the cassette memory unit through decompressing the data, in the case of reproduction.

A further aim of preferred embodiments of the invention is to provide a high speed search device of a video cassette recorder for recording a first scene in the cassette memory unit in case of a general recording as well as the photo mode recording in order to easily find out a specific scene without searching out the whole tape when reproducing.

According to a first aspect of the present invention, there is provided a high speed search device of a video cassette recorder comprising a first data compressing unit for receiving data in units of predetermined bits from an external system and compressing said data so as to reduce it into a predetermined amount; an error correcting code inserting unit connected with said first data compressing unit for inserting an error correcting code between said data; a modulator connected with said error correcting code inserting unit for modulating said data coded in accordance with a recording type; a record signal amplifier connected with said modulator for amplifying said modulated data; a recording medium connected with said amplifier for recording said amplified data, a reproduction signal amplifier connected with said recording medium for amplifying said recorded data for its reproduction; a demodulator connected with said reproduction signal amplifier for changing said modulated data into its original form; an error correcting/decoding unit connected with said demodulator for correcting and decoding the output of said demodulator with said inserted error correcting code; a first data decompressing unit connected with said error correcting/ decoding unit for decompressing said compressed data into its original data; a second compressing unit for compressing said input data into a predetermined amount of data; a first cassette memory unit connected with said second compressing unit for storing said compressed data in a memory of a cassette; a second cassette memory unit for storing previous data; a second data decompressing unit connected with said second cassette memory unit for decompressing the data stored in said memory; and a micro-computer connected between said second data compressing unit and said first cassette memory unit, and between the second data compressing unit and said second cassette memory unit, for controlling a storage and a compression of data.

Suitably, said data is image data.

Suitably, said second data compressing unit compresses the same data as said first data compressing unit does.

Suitably, said error correcting code is not inserted into said first cassette memory unit.

According to the present invention in a second aspect, there is provided a high speed search device for a video cassette recorder, the device comprising a memory for storing image data according to a control unit.

Suitably, the device further comprises any one or more of the features of the accompany description, claims, drawing and/or abstract, in any combination.

According to the present invention in a third aspect there is provided a video cassette recorder comprising a high speed search device according to any preceding aspect of the invention.

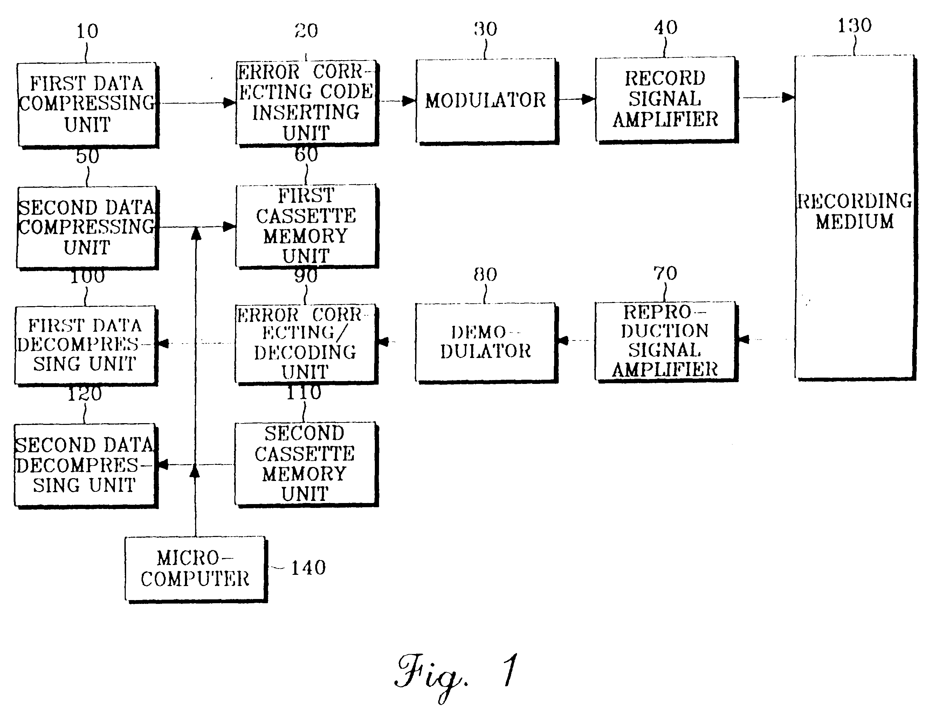

The present invention will now be described, by way of example only, with reference to Figure 1 which is a block diagram of a video cassette recorder according to the present invention.

The following is a detailed description of the preferred embodiment of the invention, referring to the attached drawing.

Though not shown in the drawings, a conventional definition video cassette recorder has the same construction as in FIG. 1 except for a second data compressing unit 50, a second data decompressing unit 120, and a micro-computer 140.

As shown in FIG. 1, the preferred embodiment of the present invention comprises a first data compressing unit 10 for receiving data in units of predetermined bits and compressing the data so as to reduce it into a predetermined amount, an error correcting code inserting unit 20 connected with the first data compressing unit 10 for inserting an error correcting code between the data, a modulator 30 connected with the error correcting code inserting unit 20 for modulating the data coded in accordance with a recording type, a record signal amplifier 40 connected with the modulator 30 for amplifying the modulated data, a recording medium 130 connected with the amplifier 40 for recording the amplified data, a reproduction signal amplifier 70 connected with the recording medium 130 for amplifying the recorded data for its reproduction, a demodulator 80 connected with the reproduction signal amplifier 70 for changing the modulated data into its original form, an error correcting/decoding unit 90 connected with the demodulator 80 for correcting and decoding the output of the demodulator with the inserted error correcting code, a first data decompressing unit 100 connected with the error correcting/decoding unit 90 for decompressing the compressed data into its original data, a second data compressing unit 50 for compressing input data into a predetermined amount of data, a first cassette memory unit 60 connected with the second compressing unit 50 for storing the compressed data in the memory of the cassette, a second cassette memory unit 110 for storing previous data, a second data decompressing unit 120 connected with the second cassette memory unit 110 for decompressing the data stored in the memory, and a micro-computer (MICOM) 140 connected between the second data compressing unit 50 and the first cassette memory unit 60, and between the second data decompressing unit 120 and the second cassette memory unit 110, for controlling storage and decompression of the data.

In the conventional definition cassette recorder, even though there is offered a cassette memory, it records just the time code such as the date and time of an image photographed in the photo mode, and position of the image on the tape. Consequently, it is very inconvenient to use the conventional definition cassette recorder.

On the contrary, the present invention has the data compressing unit 50 for compressing the images which will be recorded in the cassette memory unit 60. Thus the cassette memory unit 60 can record the actually photographed images in the form of compressed data as well as the time code, so that users can find out the specific scene more conveniently. To achieve this, the second data compressing unit 50 compresses the input data together with the first data compressing unit 10 recording the input photo mode on the tape in the prior art, and the first cassette memory unit 60 records the compressed data. The data recorded in the cassette memory unit 60 does not have to pass by the error correction code (ECC) inserting unit 20 because the data does not contain an error. Consequently, data is not added any more so that there is no need to increase the capacity of the cassette memory. The recorded position on the tape, time code, and other data as well as the compressed image data can be input into the cassette memory, and users can immediately find out the image which they want to see when reproducing. The description above is applied to the general recording not limited to the photo mode. For example, when users perform recording for some length of time at some place, the first scene is made to be recorded in the cassette memory as a representative scene. Then it is possible to search images easily.

Therefore, it should be understood that the present invention is not limited to the particular embodiment disclosed herein as the best mode contemplated for carrying out the present invention, but rather that the present invention is not limited to the specific embodiments described in this specification except as defined in the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A high speed search device of a video cassette recorder comprising:
a first data compressing unit (10) for receiving data in units of predetermined bits from an external system and compressing said data so as to reduce it into a predetermined amount;
an error correcting code inserting unit (20) connected with said first data compressing unit (10) for inserting an error correcting code between said data;
a modulator (30) connected with said error correcting code inserting unit (20) for modulating said data coded in accordance with a recording type;
a record signal amplifier (40) connected with said modulator (30) for amplifying said modulated data;
a recording medium (130) connected with said amplifier (40) for recording said amplified data;
a reproduction signal amplifier (70) connected with said recording medium (130) for amplifying said recorded data for its reproduction;
a demodulator (80) connected with said reproduction signal amplifier (70) for changing said modulated data into its original form;
an error correcting/decoding unit (90) connected with said demodulator (70) for correcting and decoding the output of said demodulator (80) with said inserted error correcting code;
a first data decompressing unit (100) connected with said error correcting/decoding unit (90) for decompressing said compressed data into its original data;
a second compressing unit (50) for compressing said input data into a predetermined amount of data;
a first cassette memory unit (60) connected with said second compressing unit (50) for storing said compressed data in a memory of a cassette;
a second cassette memory unit (110) for storing previous data;
a second data decompressing unit (120) connected with said second cassette memory unit (110) for decompressing the data stored in said memory (110); and
a micro-computer (140) connected between said second data compressing unit (50) and said first cassette memory unit (60), and between said second data decompressing unit (120) and said second cassette memory unit (110), for controlling storage and decompression of data.

2. A device according to claim 1, wherein said data is image data.

3. A device according to claim 1 or claim 2, wherein said second data compressing unit (120) compresses the same data as said first data compressing unit (60) does.

4. A device according to any preceding claim, wherein said error correcting code is not inserted into said first cassette memory unit (60).

5. A high speed search device for a video cassette recorder, the device comprising a memory for storing image data according to a control unit (140).

6. A device according to claim 5, further comprising any one or more of the features of the accompanying description, claims, drawing and/or abstract, in any combination.

7. A video cassette recorder comprising a high speed search device according to any preceding claim.
